# EUROPEAN PATENT APPLICATION

(11) **EP 3 460 536 A1**
(43) Date of publication of application: **27.03.2019**
(21) Application number: 18195828.1
(22) Date of filing: 20.09.2018
(51) Int. Cl.: G02B 1/11, B60R 1/04, B60R 1/08, B60R 1/12, G02F 1/1335, G02B 5/08

(54) **ELECTRONIC MIRROR WITH AN ENHANCED SWITCHABLE LENS SYSTEM**

(30) Priority: 20.09.2017 US 201715710018
(71) Applicant: Visteon Global Technologies, Inc., Van Buren Township, MI 48111-5711 (US)
(72) Inventor: WEINDORF, Paul, NOVI, MI Michigan 48377 (US)
(74) Representative: Dummett Copp LLP

(57) **Abstract**

An electronic mirror (e-mirror) system (300) is disclosed herein. The system (300) includes a backlit display (310) configured to present content; a first reflective polariser (220) overlapping the backlit display (310); an air gap layer (710) introduced between the backlit display (310) and the first reflective polariser (220); a rotator cell layer (230) directly overlapping the first reflective polariser (220); a second reflective polariser (240) directly overlapping the rotator cell (230); a switchable polariser (250) directly overlapping the second reflective polariser (240); and a lens (260) directly overlapping the switchable polariser (250). Also included herein is an index-matched interface (810) and front antireflective film (720), thereby allowing the e-mirror (300) to be in either a reflective mode or an electronic display mode without requiring a toggling towards a low-luminance surface.

## Description

### BACKGROUND

Electronic displays are provided in many contexts to electronically render digital information to a viewer. An electronic display receives information, and renders the information through lighted cells in patterns that reflect the texts and pictures employed to convey the information.

In the vehicular space, information has traditionally been conveyed via mechanical elements (gauges, lights, rotating digits). In recent times, mechanical displays have been replaced with electronic displays in both the instrument cluster area (the space traditionally behind the steering wheel and embedded in a dashboard) and the infotainment area.

Electronic-mirrors (e-mirrors) are newly being developed to also convey information. E-mirrors exist in two distinct states: a reflective state (i.e. mirror mode) and a display state. Conventionally, multiple layers are provided in an overlapping fashion. If display information is requested, a switchable lens is converted to be primarily transparent. Conversely, the switchable lens is converted to primarily be reflective.

### SUMMARY

The following description relates to providing a system, method, and device for an e-mirror system with an enhanced switchable lens assembly. Exemplary embodiments may also be directed to any of the system, the method, or an application disclosed herein, and the subsequent implementation in a vehicular context.

According to a first aspect of the invention, there is provided an electronic-mirror (e-mirror) system, comprising:
a backlit display;
a first reflective polarizer layer overlapping the backlit display;
an air gap layer introduced between the backlit display and the first reflective polarizer;
a rotator cell layer directly overlapping the first reflective polarizer;
a second reflective polarizer directly overlapping the rotator cell; and
a switchable polarizer directly overlapping the second reflective polarizer;
wherein the backlit display is configured to present graphical image content to a viewer of the backlit display by transmitting light through the first reflective polarizer, the rotator cell, the second reflective polarizer and the switchable polarizer towards a viewer of the e-mirror.

The e-mirror system may further comprise a first antireflective layer physically in abutment with the backlit display on a surface opposing the air gap, a second antireflective layer physically in abutment with first reflective layer on a surface opposing the air gap.

According to a second aspect of the invention, there is provided an electronic-mirror (e-mirror) system, comprising:
a backlit display;
a first reflective polarizer layer overlapping the backlit display;
an optical adhesive layer introduced between the backlit display and the first reflective polarizer, the optical adhesive layer covering a whole surface of the backlit display viewable to a viewer of the e-mirror system;
a rotator cell layer directly overlapping the first reflective polarizer;
a second reflective polarizer directly overlapping the rotator cell; and
a switchable polarizer directly overlapping the second reflective polarizer;
wherein the backlit display is configured to present graphical image content to a viewer of the backlit display by transmitting light through the first reflective polarizer, the rotator cell, the second reflective polarizer and the switchable polarizer towards a viewer of the e-mirror.

Further features of both aspects of the invention will now be further described.

The term "lens" as used herein is conventionally used in the technical field of displays to mean a substantially transparent layer or sheet, which may be clear or colored and either planar or curved, and which may be provided separately or in conjunction with other layers, and positioned between the viewer and display elements for providing information to the viewer.

The e-mirror system may further comprise a lens directly overlapping the switchable polarizer. The lens preferably covers the entire viewable image area of the e-mirror.

The lens is preferably a front glass with an antireflective coating.

The switchable polarizer may be switchable between a first state and a second state, the switchable polarizer in the first state being configured to transmit incident light of a first polarization and of a second polarization, the first polarization being orthogonal to the second polarization, and the switchable polarizer in the second state being configured to substantially block incident light of the first polarization and transmit light of the second polarization.

The second reflective polarizer may be configured to reflect light of the first polarization and transmit light of the second polarization.

The rotator cell may be switchable between a first state and a second state, the polarization of light transmitted through the rotator cell not being rotated when the rotator cell is in the first state and being rotated by substantially 90° when the rotator cell is in the second state.

The first reflective polarizer may be configured to transmit light of the first polarization and reflect light of the second polarization.

The e-mirror system may then substantially reflect incident light when the switchable polarizer is in the first state and the rotator cell is in the first state in order to present to a viewer a reflected image from said reflected incident light.

Furthermore, the e-mirror system may substantially prevent incident light from being reflected when the switchable polarizer is in the second state and the rotator cell is in the second state, such that the contrast to the viewer of the graphical image content over any reflected image due to residual reflected incident light is enhanced.

The backlit display, the rotator cell layer and the switchable polarizer may each be electrically coupled to a corresponding controllable voltage source, and in response to the backlit display being turned on, each of said controllable voltage sources may then be configured to apply a corresponding voltage in order to switch the switchable polarizer to the second state, switch the rotator cell to the second state in order to suppress reflection of ambient light and to energize a backlight of the backlit display to provide light for the graphical image content with enhanced contrast.

The e-mirror system may be laterally divided into a plurality of laterally adjacent zones, these zones comprising a first zone and a second zone, the first zone being laterally adjacent the second zone. In one embodiment of the invention, the first zone is a reflective surface, and the backlit display is provided in said second zone.

The backlit display may be a digital electronic screen.

Additional features of the invention will be set forth in the description which follows, and in part will be apparent from the description, or may be learned by practice of the invention.

It is to be understood that both the foregoing general description and the following detailed description are exemplary and explanatory and are intended to provide further explanation of the invention as claimed. Other features and aspects will be apparent from the following detailed description, the drawings, and the claims.

### DESCRIPTION OF THE DRAWINGS

The invention will now be further described, by way of example only and with reference to the following drawings, in which like numerals refer to like items, and in which:
Figures 1A and 1B illustrate an example of an e-mirror;
Figures 2A to 2C illustrate an e-mirror employing a switchable lens system;
Figure 3 illustrates a diagram illustrating an implementation of an e-mirror employing an enhanced switchable lens system according to exemplary embodiments;
Figure 4 illustrates a cross-sectional diagram of an e-mirror system;
Figures 5A to 5E illustrate the operation of the e-mirror system of Figure 4 in a reflection mode;
Figures 6A to 6E illustrate the operation of the e-mirror system of Figure 4 in a display mode;
Figures 7A and 7B illustrate a side-view of a e-mirror system according to a first and second preferred embodiment of the invention;
Figure 8 illustrates a side-view of a e-mirror system according to a third preferred embodiment of the invention; and
Figure 9 illustrates a e-mirror operating with an application employing aspects disclosed herein.

### DETAILED DESCRIPTION

The invention is described more fully hereinafter with references to the accompanying drawings, in which exemplary embodiments of the invention are shown. This invention may, however, be embodied in many different forms and should not be construed as limited to the embodiments set forth herein. Rather, these exemplary embodiments are provided so that this disclosure is thorough, and will fully convey the scope of the invention to those skilled in the art. It will be understood that for the purposes of this disclosure, "at least one of each" will be interpreted to mean any combination the enumerated elements following the respective language, including combination of multiples of the enumerated elements. For example, "at least one of X, Y, and Z" will be construed to mean X only, Y only, Z only, or any combination of two or more items X, Y, and Z (e.g. XYZ, XZ, YZ, X). Throughout the drawings and the detailed description, unless otherwise described, the same drawing reference numerals are understood to refer to the same elements, features, and structures. The relative size and depiction of these elements may be exaggerated for clarity, illustration, and convenience.

An electronic mirror (e-mirror) is a display device that allows content to be viewable in a first state and to be a mirror in a second state. The viewable content may be any type of information, for example video images, still images, maps, graphic symbols, text or warning lights. Any such viewable content is referred to herein a "graphical image content".

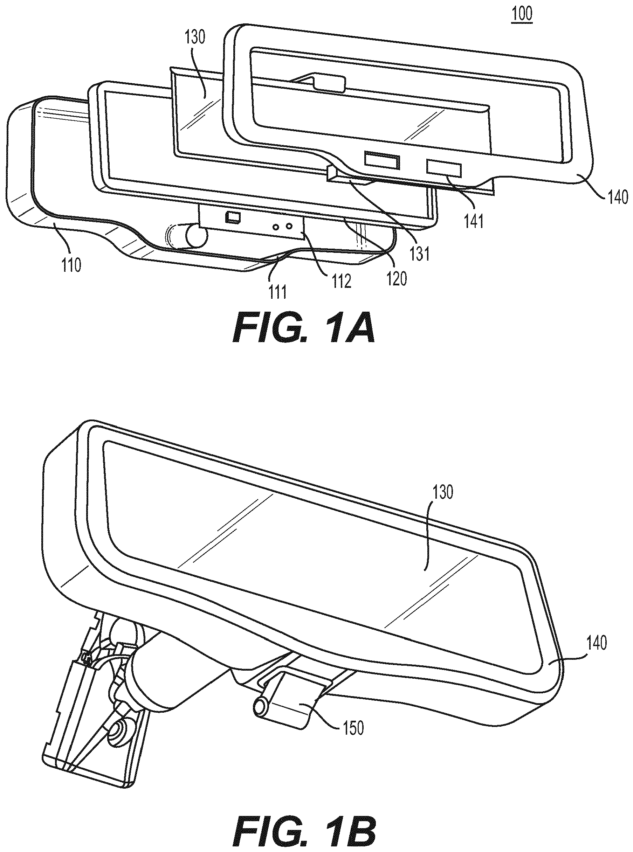

Figures 1A and 1B illustrate an exemplary e-mirror 100, the subject of which is the focus of the disclosed concepts described herein. Referring to Figure 1A, an exploded-view is presented with each individual component separately shown. Referring to Figure 1B, the e-mirror 100 in a fully assembled view is illustrated.

A rear cover 110 is provided and serves as a housing for the remaining components. Specifically, the rear cover includes a circuit board 112 with a switch 111 mounted thereon. The switch 111 may be coupled to a mechanical or electrical stimulus, and when asserted, causes the e-mirror 100 to switch modes from a reflective state to a display state.

The first layer disposed on the rear cover 110 is an electronic display 120. The electronic display 120 may be any sort of device capable of digitally rendering information for display. Overlapping the display 120, is a switchable lens 130. The lens 130 is switchable to allow the display 120 to be viewable in one-mode, referred to as a display mode, and is reflective to incident light in another mode, referred to as a reflective mode. The switchable lens 130 may be provided with a button assembly 131, viewable via an aperture in a front bezel 140. When the button assembly 131 is asserted, the switch 111 may be activated, thereby switching the e-mirror 100 from the display mode in which the switchable lens is substantially transparent to light transmitted from the display towards a viewer to the reflective mode in which the switchable lens is substantially reflective to incident light so that a viewer can view a reflected image in the switchable lens. Also provided is a sensor 141 disposed on the front bezel 140. The sensor 141 is rear looking so that the sensor can be used to generate a measure of the luminance of ambient light incident on the switchable lens. The e-mirror will most commonly be mounted inside a motor vehicle, within the field of view of a driver, immediately inside a front windscreen. Optionally, a front looking sensor (not shown) may record ambient lighting conditions from outside the vehicle, and be employed to adjust the luminance on the display or the mirror reflectance of the switchable lens 130 accordingly.

As shown in Figure 1B, e-mirrors may employ a tilt toggle mechanism 150. In order to improve the contrast of the e-mirror 100 in a display mode, the e-mirror 100 may be oriented at a motor vehicle headliner or ceiling surface (or another relatively low luminance surface inside a vehicle compartment) This is due to limitations of current switchable lenses. Thus, the tilt toggle 150 re-adjusts the e-mirror 100 so that it is in a state of being oriented at a low luminance surface of the vehicle (during the display mode), and a state of being oriented towards a back portion of the vehicle (during the mirror mode).

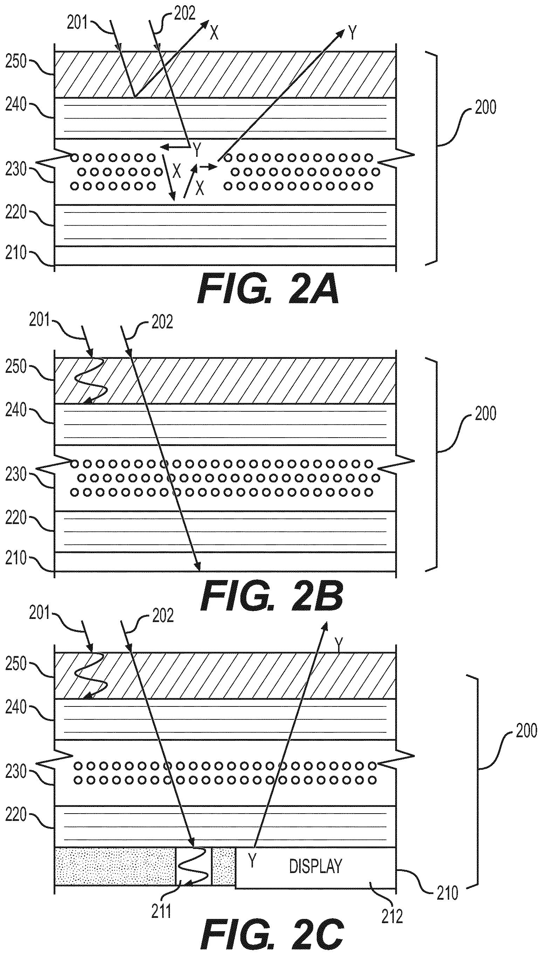

These devices may employ switchable lens assemblies, such as a switchable lens assembly 200 which has three states, as shown respectively in Figures 2A to 2C.

The switchable lens assembly (e-mirror) 200 includes a display assembly 210, with a beam stop 211 and a display 212, which also is substantially a beam stop. Overlapping the display assembly 210, and in physical abutment is a first reflective polarizer layer 220. A reflective polarizer transmits the desired polarization and reflects the rest. Reflective polarizers either use a wire grid, Brewster's angle or interference effects, to achieve this technical effect.

Overlapping the first reflective polarizer layer 220 is a switchable liquid crystal layer (or rotator cell layer) 230. The switchable liquid crystal layer 230 is electrically coupled to a control voltage source (not shown). The control voltage source can be applied so that the crystals are either parallel to the display assembly 210 and or perpendicular to the display assembly 210. When the crystals are parallel to the display assembly 210, the light's polarization is rotated.

Overlapping, and in physical abutment as shown, with the switching liquid crystal layer 230 is a second reflective polarizer layer 240. The second reflective polarizer layer 240 is overlapped with a switchable polarizer layer 250. The switchable polarizer layer 250 is electrically coupled to a control voltage source (not shown).

Figure 2A illustrates a non-energized state (so essentially no voltage is applied to any of the layers shown). In this instance, all incident light 201, 202 is reflected. A first component 201 of the incident light is of a first polarized state, and a second component 202 of the incident light is of a second polarized state (orthogonal to the first state). In Figure 2A, both polarization components 201, 202 are reflected to a viewer of the e-mirror 200.

In Figure 2B, the device 200 is energized. In this state, the first polarization component 201 of the light is absorbed by the switchable polarizer layer 250, but the second polarization component 202 of the light is allowed through (not rotated) to be absorbed by the display or beam stop (light absorber) outside of the display area. Figure 2C illustrates an example of introducing a beam stop 211 and a display 212. The beam stop 211 is capable of absorbing the second polarization component 202 of the light entering the cell. Accordingly, in response the display 212 is configured to display content via the same polarization as that of the second polarization component 202 with a desired luminance, sufficient to be viewable by the viewer under the current ambient lighting conditions. The display luminance needs to be set to the level such that any image in reflected light (e.g. reflected from the external surface of the e-mirror or at interfaces within the assembly) is not noticeable to the viewer. In practice, this is a much higher illuminance than that required just for visibility of the display.

As explained above in relation to Figure 1B, employing a construction such as that shown in Figures 2A to 2C leads to the desirability of including also a tilt toggle mechanism to orient the display such that any reflected image is of a neutral background, such as a headliner or ceiling surface of the vehicle, when in the display mode.

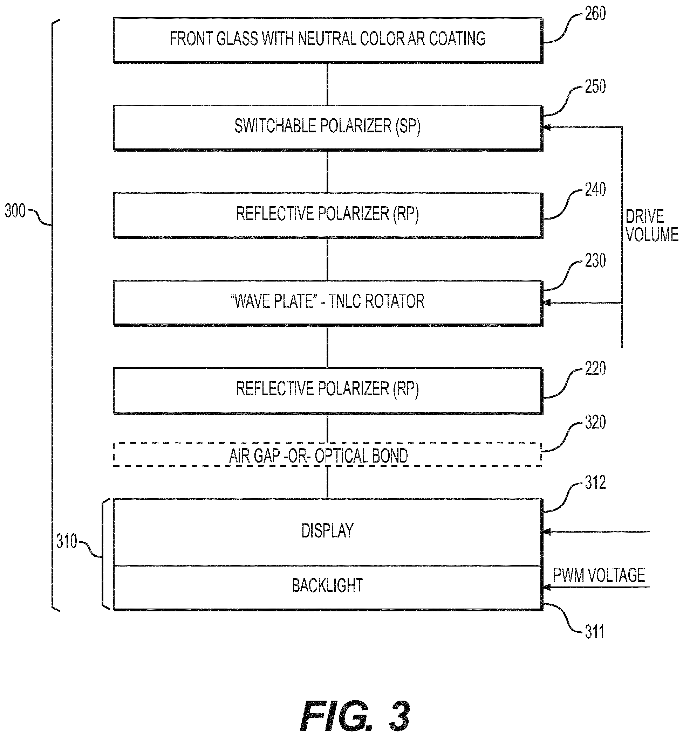

Figure 3 illustrates a diagram of a switchable lens assembly, or e-mirror 300 employing the aspects disclosed herein. The e-mirror 300 comprises a display assembly 310 that includes a backlight 311 and a display 312. The backlight 311 provides light to the display 312, which is based on liquid crystal cell based technology, determines a pattern to illuminate and make viewable to a viewer of the e-mirror 300.

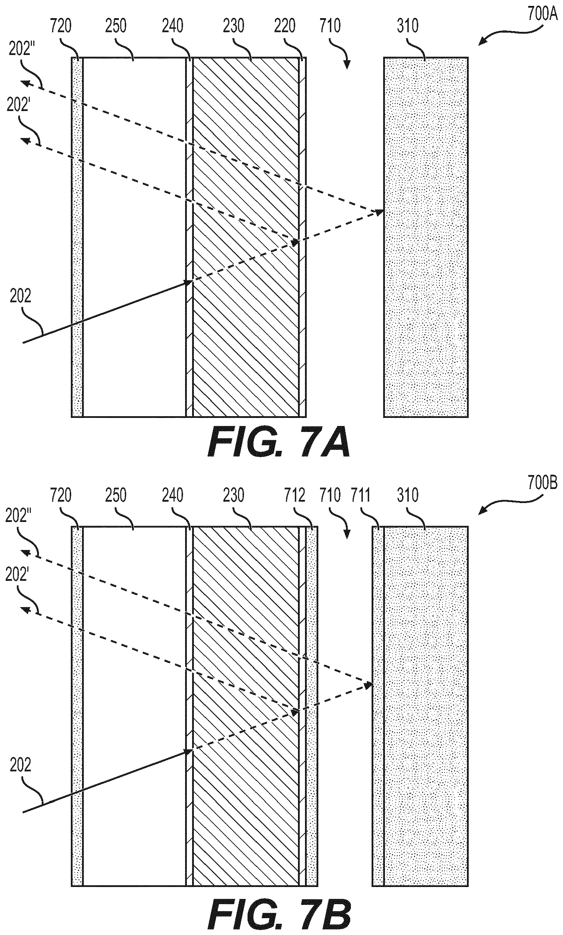

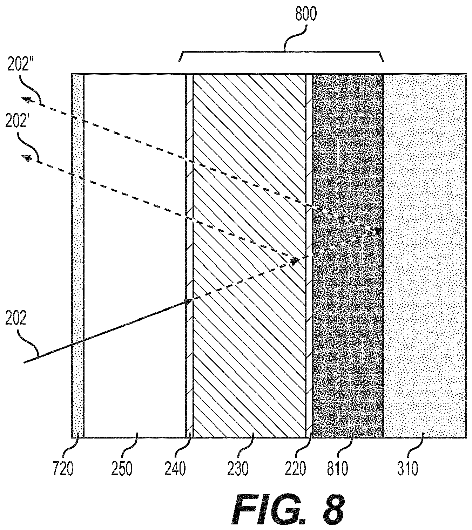

An air gap or an index matching layer 320 is provided to overlap the display assembly 310. Figures 7A, 7B and 8 illustrate various embodiments of the e-mirror 300 employing variations for this layer 320. Whenever optical bonding of optical elements is not used, resulting in a pair of interfaces between air and a transparent substrate (e.g. glass, polycarbonate, clear acrylic, etc., - referred to generically hereinafter as "glass") on opposite sides of an air gap, typically about 4% of the incident light is lost to back reflection. Each interface reflects about 2% for a total of 4% if. If an optical bond 220 is introduced, there is minimal reflection and the light passes to the display to be absorbed. Preferably therefore, losses due to reflections at the glass to air or front display polarizer to air interfaces may be minimized with an anti-reflection (AR) coating, or a motheye film (referred to hereinafter as an AR layer). A lens 260, in this example a front glass with a color-neutral antireflection front coating, is therefore provided to overlap the switchable polarizer and includes a front surface AR layer to reduce the optical losses due to reflection at interfaces.

The following embodiments have been introduced in this disclosure:
1) An air gap 710 with anti-reflective layers on the opposite surfaces bounding the air gap; and
2) Liquid Optical Clear Adhesive (LOCA), or Optically Clear Adhesive (OCA).

Overlapping the optically index matched layer 320 is a structure similar to that shown in Figures 2A to 2C. Overlapping the structure as shown in Figures 2A to 2C is a front glass with AR on the front surface. The switchable polarizer layer 250 is configured to switch polarization state based on an applied voltage.

The e-mirror 300 is either on (+Drive Voltage) or off (+Drive Voltage removed). The on (display mode) and off (reflective mode) states will be described in greater detail below with the following descriptions and figures. Similarly, a pulse width modulated (PWM) voltage may be applied to the various backlit displays described herein.

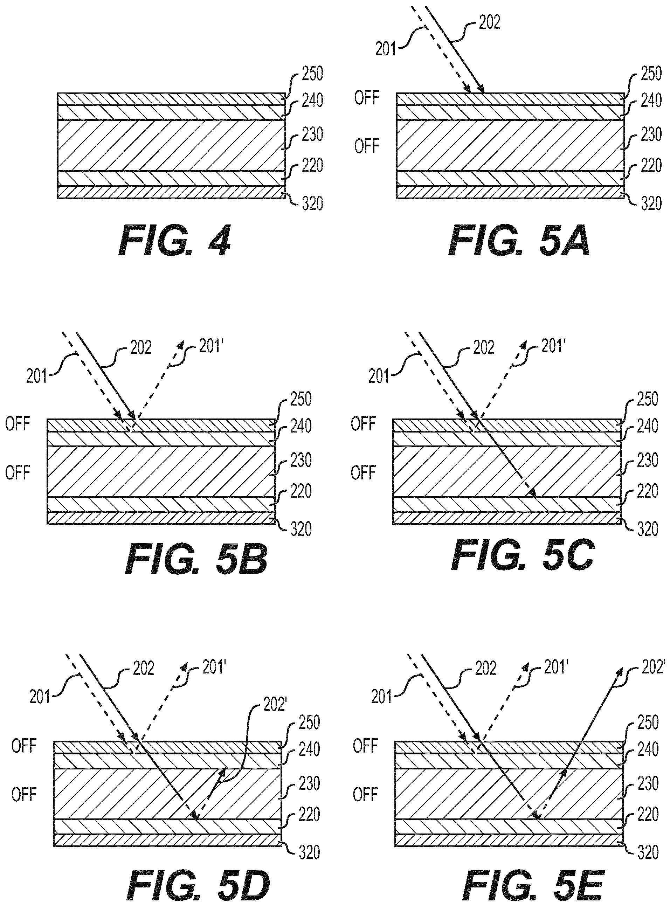

Referring to Figures 4 , 5A to 5E and 6A to 6E, cross-sectional diagrams of relevant layers of the e-mirror 300 are shown for the purposes of further explaining the invention. The layers shown 320, 220, 230, 240, 250 are each in physical abutment with adjacent layers.

Figures 5A to 5E illustrate a cross-sectional diagram of the e-mirror 300 when both the switchable polarizer layer 250 and rotator cell layer 230 are off. The progression of Figures 5A to 5E each illustrate a progressive state of the two polarization components 201, 202 of light being propagated through the various layers.

In this example, the e-mirror 300 acts like a reflective layer, and essentially reflects light directed towards the viewer viewing the e-mirror 300. This is shown by the two polarization components 201, 202 (which represent light at two different polarization states, orthogonal to each other). As shown, both incident light components 201, 202 and both reflected light components 201', 202' are projected back to a viewer.

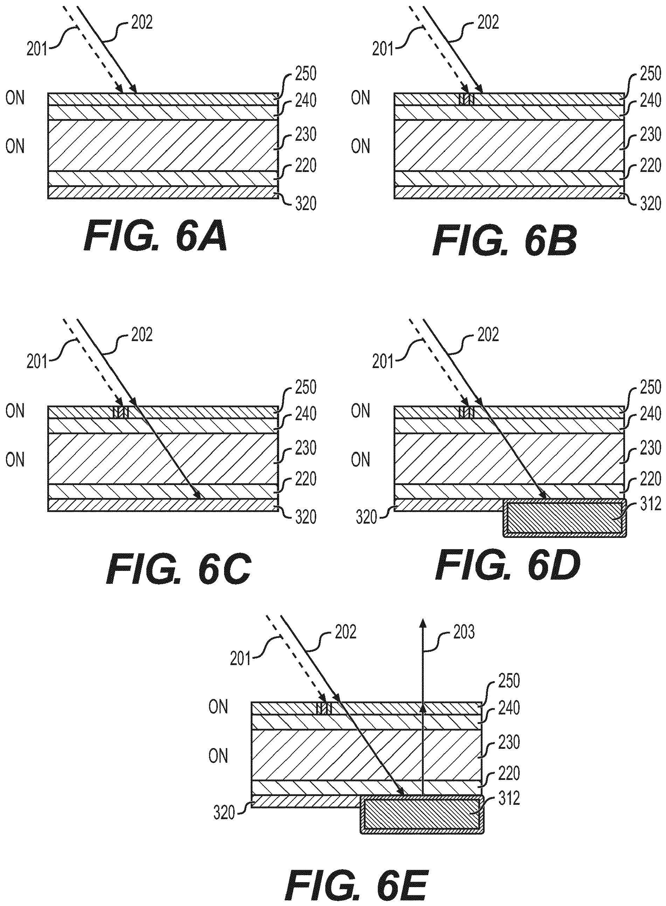

Figures 6A to 6E illustrate a cross-sectional diagram of the e-mirror 300 when both the switchable polarizer layer 250 and rotator cell layer 230 are on. The two polarization component 201, 202 of incident light, similar to the example shown in Figures 5A to 5E have linear polarizations that are orthogonal to each other and are each shown propagating through the various layers of the e-mirror 300 in a progressive fashion.

As shown, both light polarization components 201, 202 are propagated through the layers, and ultimately absorbed at various stages. The first light polarization component 201 is absorbed at the switchable polarizer layer 250, while the second light polarization component 202 is projected all the way to the display 312. The display 312 emits light 203 which is then viewed by the viewer.

Figures 7A and 7B illustrate side-views of two embodiments of an e-mirror 700A, 700B according to an exemplary implementation employing an air gap 710 which may optionally be bounded on one or both sides by a corresponding AR layer. Also shown in Figures 7A and 7B and introduced to the construction of the e-mirror systems 700A, 700B is an anti-reflective layer 720 on the external surface of the e-mirror facing towards the viewer.

Referring to Figure 7A, an air gap 710 is introduced in between the display assembly 310 and the first reflective polarizer layer 220. Referring to Figure 7B, in addition to the air gap 710, a first anti-reflective layer 711 is physically disposed (and in abutment) with the display assembly 310 and serves to reduce reflected light 202" originating from the incident second polarization component 202, and a second anti-reflective layer 712 is physically disposed (and in abutment) with the first reflective polarizer layer 220 and serves to reduce reflected light 202' originating from the incident second polarization component 202. However, in situations where only an air gap 710 is introduced, too much light is reflected. As such, the introduction of the anti-reflective layers 711 and 712 lessens this reflection. The AR layer 720 may be a separate layer applied to the glass, or a textured outer surface profile of the glass, e.g. a motheye structure. Doing so prevents another 4% reflection loss when the display mode is utilized.

Figure 8 illustrates a side-view of another embodiment of an e-mirror 800 implementation according to the aspects disclosed herein. In the e-mirror 800 shown, in lieu of an air gap for an absorption layer 320, a liquid optical clear adhesive (LOCA) layer 810 (or alternatively, with an optical clear adhesive) is applied between the display assembly 310 and the first reflective polarizer layer 220, and then cured, for example by ultraviolet (uv) curing or heat curing. The LOCA layer 810 shown in Figure 8 completely covers the display assembly 310, and the viewable portions of the display assembly 310 through the various layers.

Thus, employing any of the e-mirror implementations disclosed herein (700A, 700B, or 800, for example), an implementer is able to provide an e-mirror system without requiring a tilt toggle mechanism.

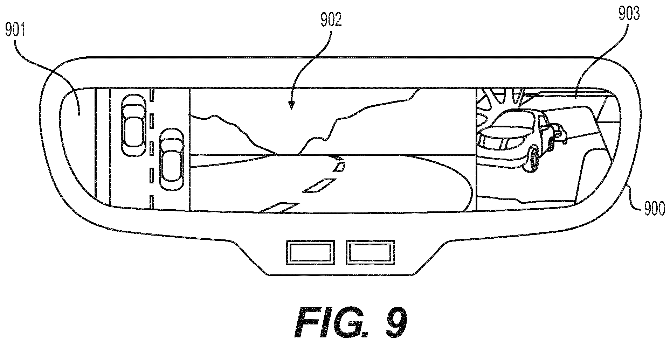

Figure 9 illustrates an embodiment in which the aspects disclosed herein are employed to implement a sample e-mirror 900. As shown, there are three laterally adjacent zones 901, 902, and 903. A first zone 901 and a third zone 903 are employed for an electronic rendering (for example, showing information displayed from a coupled camera). Simultaneously, a second zone 902, positioned between the first and third zones 901, 903, is employed for a reflective purpose, thereby reflecting content being seen from behind the vehicle.

As a person skilled in the art will readily appreciate, the above description is meant as an illustration of implementation of the principles this invention. This description is not intended to limit the scope or application of this invention in that the invention is susceptible to modification, variation and change, without departing from scope of this invention, as defined in the following claims.

## Claims

1. An electronic-mirror (e-mirror) system, comprising:
a backlit display;
a first reflective polarizer layer overlapping the backlit display;
an air gap layer introduced between the backlit display and the first reflective polarizer;
a rotator cell layer directly overlapping the first reflective polarizer;
a second reflective polarizer directly overlapping the rotator cell; and
a switchable polarizer directly overlapping the second reflective polarizer;
wherein the backlit display is configured to present graphical image content to a viewer of the backlit display by transmitting light through the first reflective polarizer, the rotator cell, the second reflective polarizer and the switchable polarizer towards a viewer of the e-mirror.

2. The e-mirror system according to claim 1, further comprising a first antireflective layer physically in abutment with the backlit display on a surface opposing the air gap, a second antireflective layer physically in abutment with first reflective layer on a surface opposing the air gap.

3. An electronic-mirror (e-mirror) system, comprising:
a backlit display;
a first reflective polarizer layer overlapping the backlit display;
an optical adhesive layer introduced between the backlit display and the first reflective polarizer, the optical adhesive layer covering a whole surface of the backlit display viewable to a viewer of the e-mirror system;
a rotator cell layer directly overlapping the first reflective polarizer;
a second reflective polarizer directly overlapping the rotator cell; and
a switchable polarizer directly overlapping the second reflective polarizer;
wherein the backlit display is configured to present graphical image content to a viewer of the backlit display by transmitting light through the first reflective polarizer, the rotator cell, the second reflective polarizer and the switchable polarizer towards a viewer of the e-mirror.

4. The e-mirror system according to claim any one of the preceding claims, further comprising a lens directly overlapping the switchable polarizer.

5. The e-mirror system according to claim 4, in which the lens is a front glass with an antireflective coating.

6. The e-mirror system according to any one of the preceding claims, in which the switchable polarizer is switchable between a first state and a second state, the switchable polarizer in the first state being configured to transmit incident light of a first polarization and of a second polarization, the first polarization being orthogonal to the second polarization, and the switchable polarizer in the second state being configured to substantially block incident light of the first polarization and transmit light of the second polarization;
the second reflective polarizer is configured to reflect light of the first polarization and transmit light of the second polarization;
the rotator cell is switchable between a first state and a second state, the polarization of light transmitted through the rotator cell not being rotated when the rotator cell is in the first state and being rotated by 90° when the rotator cell is in the second state;
the first reflective polarizer is configured to transmit light of the first polarization and reflect light of the second polarization;
whereby
the e-mirror system substantially reflects incident light when the switchable polarizer is in the first state and the rotator cell is in the first state in order to present to a viewer a reflected image from said reflected incident light;
the e-mirror system substantially prevents incident light from being reflected when the switchable polarizer is in the second state and the rotator cell is in the second state, such that the contrast to said viewer of said graphical image content over any reflected image due to residual reflected incident light is enhanced.

7. The e-mirror system according to claim 6, wherein the backlit display, the rotator cell layer and the switchable polarizer are each electrically coupled to a corresponding controllable voltage source, and in response to the backlit display being turned on, each of said controllable voltage sources is configured to apply a corresponding voltage in order to switch the switchable polarizer to the second state, switch the rotator cell to the second state in order to suppress reflection of ambient light and to energize a backlight of the backlit display to provide light for said graphical image content with said enhanced contrast.

8. The e-mirror system according to any one of the preceding claims, in which said e-mirror system is laterally divided into a plurality of laterally adjacent zones, said zones comprising a first zone and a second zone, the first zone being laterally adjacent the second zone wherein the first zone is a reflective surface, and the backlit display is provided in said second zone.

9. The e-mirror system according to any one of the preceding claims, in which the backlit display is a digital electronic screen.
